Europäisches Patentamt

European Patent Office

Office européen des brevets

(19)

(11) Veröffentlichungsnummer: **0 229 988**
**B1**

(12) **EUROPÄISCHE PATENTSCHRIFT**

(45) Veröffentlichungstag der Patentschrift:
28.03.90

(51) Int. Cl.⁴: **G06F 12/14**

(21) Anmeldenummer: 86117335.9

(22) Anmeldetag: 12.12.86

(54) Schaltungsanordnung zum Sperren der Übertragung von Daten innerhalb eines Gerätes.

(30) Priorität: 16.12.85 DE 3544440

(43) Veröffentlichungstag der Anmeldung:
29.07.87 Patentblatt 87/31

(45) Bekanntmachung des Hinweises auf die Patenterteilung:
28.03.90 Patentblatt 90/13

(84) Benannte Vertragsstaaten:
CH DE FR GB IT LI SE

(56) Entgegenhaltungen:
EP-A- 0 136 155
US-A- 4 521 853

(73) Patentinhaber: Siemens Aktiengesellschaft,
Wittelsbacherplatz 2, D-8000 München 2(DE)

(72) Erfinder: Rotscheidt,Wolfgang,Dipl.-Ing.(FH),
Lindenberg 8, D-8134 Pöcking(DE)
Erfinder: Müller,Rudolf,Dipl.-Ing.(FH), Alblinger
Strasse 4, D-8093 Rott/Inn(DE)

## Beschreibung

Die Erfindung bezieht sich auf eine Schaltungsanordnung zum Sperren der Übertragung von Daten innerhalb eines Gerätes gemäß dem Oberbegriff des Patentanspruchs 1.

Es ist allgemein bekannt, eine Übertragung von Daten zwischen mit einem Mikrorechner verbundenen ersten und zweiten Baueinheiten, insbesondere Speichern, unter Verwendung eines direkten Speicherzugriffs durchzuführen, der im angelsächsischen Sprachgebrauch als «Direct Memory Access (DMA)» bezeichnet wird. In diesem Fall werden zwischen den Baueinheiten ohne wesentliche Beteiligung des Mikrorechners Daten übertragen. Weiterhin ist es möglich, auch Daten zwischen den Baueinheiten durch eine Unterbrechungssteuerung des Mikrorechners durchzuführen.

Häufig ist es wünschenswert, eine Übertragung der Daten zwischen den ersten und zweiten Baueinheiten nicht in beliebiger Weise zuzulassen, um damit zu verhindern, daß Daten von den ersten Baueinheiten, für die keine Zugriffsberechtigung von außen vorhanden ist, über die zweiten Baueinheiten, für die eine Zugriffsberechtigung vorhanden ist, ausgelesen werden können. Hierzu ist eine Schaltungsanordnung nach US-A 4 521 853 bekannt.

Der Erfindung liegt die Aufgabe zugrunde, eine Schaltungsanordnung für eine Steuereinheit anzugeben, mittels der auf einfache Weise verhindert wird, daß Daten von den ersten Baueinheiten über die zweiten Baueinheiten ausgelesen werden können.

Erfindungsgemäß wird die Aufgabe bei der Schaltungsanordnung der eingangs genannten Art durch die im Patentanspruch 1 angegebenen Merkmale gelöst.

Die Schaltungsanordnung gemäß der Erfindung hat den Vorteil, daß mittels der aufgezeigten Steuereinheit auf einfache Weise einerseits eine ungehinderte Übertragung der Daten zwischen den ersten Baueinheiten, zwischen den zweiten Baueinheiten und von den zweiten Baueinheiten zu den ersten Baueinheiten ermöglicht, jedoch keine Übertragung von den ersten Baueinheiten in die zweiten Baueinheiten zuläßt.

In der Steuereinheit ist bei einer bevorzugten Ausführungsform eine Speichereinheit vorgesehen, die gesetzt bzw. zurückgesetzt wird, wenn die Daten von der ersten bzw. zweiten Baueinheit übertragen werden, und die an ihrem Ausgang ein die Übertragung der Daten in eine zweite Baueinheit sperrende Sperrsignale abgibt.

Als Baueinheiten sind bei einer bevorzugten Ausführungsform Speicher vorgesehen, wobei die ersten Baueinheiten als interne Speicher ausgebildet sind, auf die nicht ohne weiteres zugegriffen werden darf und die zweiten Baueinheiten als periphere oder von außen zugängliche Speicher ausgebildet sind, auf die beliebig zugegriffen werden darf.

Bei der Ausgestaltung der Baueinheiten als Speicher ist es vorteilhaft, wenn die Steuereinheit Schaltglieder enthält, mittels denen unter Verwendung des Sperrsignals Schreibsignale für die ersten Speicher sperrbar sind.

Weiterhin ist es vorteilhaft, wenn die Übertragung der Daten unter Steuerung durch den Mikrorechner derart erfolgt, daß sichergestellt ist, daß zwischen der Übertragung der Daten von einer Baueinheit und vor einer Übertragung der Daten in eine Baueinheit keine Abspeicherung der Daten durchgeführt wird.

Im folgenden wird ein Ausführungsbeispiel der Schaltungsanordnung gemäß der Erfindung anhand einer Zeichnung näher erläutert.

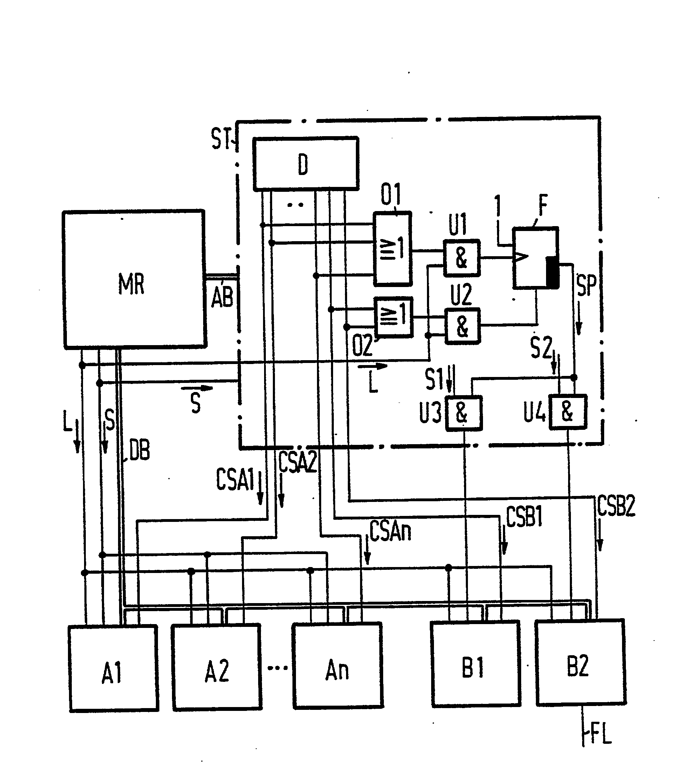

Die Figur zeigt ein Schaltbild der Schaltungsanordnung.

Bei der in der Figur dargestellten Schaltungsanordnung erfolgt eine Übertragung von Daten zwischen ersten Baueinheiten A, zwischen zweiten Baueinheiten B und von den zweiten Baueinheiten B zu den ersten Baueinheiten A. Die ersten Baueinheiten A1 bis An sind vorzugsweise als Speicher, insbesondere interne Speicher ausgebildet, auf deren Daten nicht ohne weiteres zugegriffen werden darf. Insbesondere darf auf die Daten nicht von den zweiten Baueinheiten B1 und B2 zugegriffen werden, die beispielsweise eine mit einer Fernleitung FL verbundene Sendeeinheit oder ebenfalls Speicher, insbesondere periphere oder von außen zugängliche Speicher des Gerätes sind.

Falls Daten zwischen zwei Baueinheiten A, beispielsweise zwischen den Baueinheiten A1 und An übertragen werden sollen, gibt ein Mikrorechner MR, an dem die Baueinheiten A und B angeschlossen sind, einen Lesebefehl L und über einen Adressenbus AB eine Adresse ab, die die Baueinheit A1 adressiert. In einer Steuereinheit ST ist ein Decodierer D vorgesehen, dem die Adresse zugeführt wird und der ein Auswahlsignal CSA1 erzeugt und an die Baueinheit A1 abgibt. Damit ist diese Baueinheit A1 für ein Auslesen der Daten ausgewählt. Weiterhin gibt der Mikrorechner MR einen Schreibbefehl S ab und über den Adressenbus AB wird dem Decodierer D eine Adresse zugeführt, die der Baueinheit An entspricht. Dieser erzeugt ein Auswahlsignal CSAn und führt dieses der Baueinheit An zu. Damit kann eine Übertragung von Daten zwischen den Baueinheiten A1 und An erfolgen. In entsprechender Weise erfolgt auch eine Übertragung von einer zweiten Baueinheit B zu einer ersten Baueinheit A, wobei dann an die zweite Baueinheit B1 oder B2 ein Auswahlsignal CSB1 oder CSB2 abgegeben wird.

Eine Übertragung von Daten in eine zweite Baueinheit B erfolgt nur dann, wenn die Daten nicht von einer ersten Baueinheit A stammen. Falls beispielsweise Daten von der Baueinheit B1 in die Baueinheit B2 übertragen werden sollen, werden in ähnlicher Weise wie bei der Übertragung von Daten von der Baueinheit A1 zur Baueinheit An ein Lesebefehl L, Auswahlsignale CSB1 und CSB2 und ein Schreibbefehl S erzeugt. Der Schreibbefehl S gelangt jedoch nicht unmittelbar zur Baueinheit B2, sondern über die Steuereinheit ST, die aus dem Schreibbefehl S Schreibsignale S1 und S2 erzeugt, die den Baueinheiten B1 und B2 zugeordnet sind. Diese Schreibsignale S1 und S2 gelangen nur dann zu den Baueinheiten B1 oder B2, wenn ein Sperrsignal SP das Schreiben der Daten in die entsprechende Baueinheit B gestattet.

Das Sperrsignal SP wird unter Verwendung einer als Flipflop F ausgebildeten Speichereinheit erzeugt, die gesetzt bzw. zurückgesetzt wird, wenn die Daten von den ersten Baueinheiten A bzw. zweiten Baueinheiten B gelesen werden. Ein ODER-Glied O1 erzeugt an seinem Ausgang immer dann ein Signal, wenn ein Auswahlsignal CSA für eine erste Baueinheit A erzeugt wird. Wenn gleichzeitig ein Lesebefehl L vorhanden ist, um Daten aus einer ersten Baueinheit A auszulesen, wird das Flipflop F gesetzt, da an seinem Dateneingang der Binärwert 1 ständig anliegt. An seinem invertierenden Ausgang gibt das Flipflop F das Sperrsignal SP ab, mit dem zwei als UND-Glieder U3 und U4 gebildete Schaltglieder gesperrt werden und damit verhindern, daß die Schreibsignale S1 und S2 zu den zweiten Baueinheiten B durchgeschaltet werden. Auf diese Weise ist es somit nicht möglich, Daten von einer ersten Baueinheit A in eine zweite Baueinheit B zu übertragen.

Falls jedoch, wie bei dem obigen Beispiel Daten von der Baueinheit B1 zu der Baueinheit B2 übertragen werden sollen, stellt ein ODER-Glied O2 beim Auftreten des Lesebefehls L fest, daß ein Auswahlsignal CSB1 erzeugt wurde, und über ein UND-Glied U2 wird das Flipflop F zurückgesetzt, so daß das Sperrsignal SP inaktiv ist, und die UND-Glieder U3 und U4 können die Schreibsignale S1 und S2 nicht mehr sperren. Wenn nun die Daten in die Baueinheit B2 eingeschrieben werden sollen, wird das Schreibsignal S2 erzeugt und zur Baueinheit B2 durchgeschaltet, so daß das Einschreiben ermöglicht wird.

Um zu verhindern, daß der Mikrorechner MR von einer ersten Baueinheit A gelesene Daten abspeichert, anschließend von einer zweiten Baueinheit B Daten liest und abspeichert und danach die aus der ersten Baueinheit A ausgelesenen Daten zu einer zweiten Baueinheit B überträgt, wird der Mikrorechner MR derart gesteuert, daß ein Abspeichern der von der ersten Baueinheit A gelesenen Daten nicht möglich ist. Auf diese Weise ist sichergestellt, daß in keinem Fall unberechtigterweise über die zweiten Baueinheiten B zu den Daten der ersten Baueinheiten A zugegriffen werden kann.

**Patentansprüche**

1. Schaltungsanordnung zum Sperren der Übertragung von Daten innerhalb eines Gerätes, bei der in dem Gerät erste Baueinheiten, auf die ein Zugriff von außen nicht zugelassen ist und zweite Baueinheiten vorgesehen sind, die von außen zugänglich sind, wobei eine Steuereinheit vergehsehen ist, die eine Übertragung der Daten zwischen den ersten Baueinheiten, zwischen den zweiten Baueinheiten und von den zweiten Baueinheiten zu den ersten Baueinheiten freigibt und eine Übertragung der Daten von den ersten Baueinheiten zu den zweiten Baueinheiten sperrt, dadurch gekennzeichnet, daß die Steuereinheit (ST) eine Speichereinheit (F) enthält, die gesetzt bzw. zurückgesetzt wird, wenn die Daten von einer ersten Baueinheit (A) bzw. einer zweiten Baueinheit (B) übertragen wurden und die an ihrem Ausgang ein die Übertragung der Daten in eine zweite Baueinheit (B) sperrendes Sperrsignal (SP) abgibt, daß als Baueinheiten (A, B) Speicher vorgesehen sind, aus denen die Daten auslesbar sind und in die die Daten einspeicherbar sind und daß die Steuereinheit (ST) ein Einschreiben der Daten in eine zweite Baueinheit (B) immer dann sperrt, wenn die Daten zuvor aus einer ersten Baueinheit (A) ausgelesen wurden und daß die Steuereinheit (ST) Schaltglieder (U3, U4) enthält, mittels denen unter Verwendung des Sperrsignals (SP) Schreibsignale (S1, S2) für die zweiten Baueinheiten (B) sperrbar sind.

2. Schaltungsanordnung nach dem Anspruch 1, dadurch gekennzeichnet, daß der Mikrorechner (MR) derart gesteuert ist, daß er vor einer Übertragung der Daten in eine zweite Baueinheit (B) keine Abspeicherung der Daten durchführt.

**Claims**

1. Circuit arrangement for inhibiting the transmission of data within a device, in which first components in the device, to which access from outside is not permitted, and second components are provided which are accessible from outside, the control unit king provided which clears transmission of data between the first components, between the second components and from the second components to the first components, and inhibits transmission of data from the first components to the second components, characterized in that the control unit (ST) contains a storage unit (F) which is set or re-set if data have been transmitted from a first component (A) or a second component (B) and which issues to its output an inhibit signal (SP) which inhibits the transmisson of data into a second component (B), in that memories are provided as components (A, B), from which the data can be read and in which the data can be stored and in that the control unit (ST) then always inhibits a writing-in of data into a second component (B) if the data have been previously read out of a first component (A) and, in that the control unit (S, T) contains switching elments (U3, U4), by means of which, using the inhibit signal (SP), write signals (S1, S2) can be inhibited for the second components (B).

2. Circuit arrangement according to claim 1, characterized in that the microcomputer (MR) is controlled in such a way that it does not perform a storage of the data before a transmission of the data into a second component (B).

**Revendications**

1. Montage pour bloquer la transmission de données à l'intérieur d'un appareil dans lequel il est prévu des premiers modules, dont l'accès depuis l'extérieur n'est pas autorisé, et des seconds modules qui sont accessibles de l'extérieur, et dans lequel il est prévu une unité de commande qui libère une transmission des données entre les premiers modules, entre les seconds modules et depuis les seconds modules en direction des premiers modules et bloque une transmission des données depuis les premiers modules en direction des seconds modules, caractérisé par le fait que l'unité de commande (ST) contient une unité de mémoire (F), qui est positionnée ou ramenée à l'état initial lorsque les données d'un premier module (A) ou d'un second module (B) ont été transmises et qui délivre, sur sa sortie, un signal de blocage (SP), qui bloque le transfert des données dans un second module (B), et qu'il est prévu, comme modules (A, B), des mémoires, à partir desquelles les données peuvent être lues et dans lesquelles les données peuvent être mémorisées, et que l'unité de commande (ST) bloque toujours un enregistrement des données dans un second module (B) lorsque les données ont été lues préalablement à partir d'un premier module (A), et que l'unité de commande (ST) contient des circuits de commutation (U3, U4), à l'aide desquels des signaux d'enregistrement (S1, S2) pour les seconds modules (B) peuvent être bloqués, moyennant l'utilisation du signal de blocage (SP).

2. Montage suivant la revendication 1 caractérisé par le fait que le micro-ordinateur (MR) est commandé de telle sorte qu'il n'exécute aucune mémorisation des données avant un transfert de ces dernières dans un second module (B).